# EUROPÄISCHE PATENTSCHRIFT

(11) **EP 0 561 233 B1**
(45) Veröffentlichungstag und Bekanntmachung des Hinweises auf die Patenterteilung: **19.07.1995**
(21) Anmeldenummer: 93103511.7
(22) Anmeldetag: 05.03.1993
(51) Int. Cl.: B25F 5/02, B23B 45/00, B25B 21/00

(54) **Pistolenartig ausgebildetes Elektrowerkzeug**
Gun-type electric tool
Outil électrique de type pistolet

(30) Priorität: 19.03.1992 DE 4208804
(43) Veröffentlichungstag der Anmeldung: 22.09.1993
(73) Patentinhaber: Festo KG, D-73734 Esslingen (DE)
(72) Erfinder: Abele, Hermann, W-7061 Lichtenwald 2 (DE); Steimel, Johannes, Dr., W-7311 Neidlingen (DE)
(74) Vertreter: Reimold, Otto, Dipl.-Phys.Dr.

(56) Entgegenhaltungen:
- DE-A- 3 028 464
- DE-A- 3 502 449
- DE-A- 4 100 453
- US-A- 4 810 916

## Beschreibung

Die Erfindung betrifft ein pistolenartig ausgebildetes Elektrowerkzeug, mit einem Gehäuse, das einen Maschinenkopf und einen von diesem nach Art eines Pistolengriffes quer abstehenden Handgriff bildet, wobei im Maschinenkopf eine mit einem Arbeitswerkzeug bestückbare Abtriebswelle drehgelagert ist und der Handgriff einen elektrisch betätigbaren Antriebsmotor aufnimmt, mit einem am Handgriff vorgesehenen Betätigungsschalter für den Antriebsmotor, und mit einem im Gehäuse im Übergangsbereich zwischen Maschinenkopf und Handgriff angeordneten Umlenkgetriebe, das den Kraftfluß vom Antriebsmotor zur Abtriebswelle umlenkt.

Ein derartiges Elektrowerkzeug ist aus der DE-A-4019894 bekannt.

Elektrowerkzeuge dieser Art sind insbesondere als Bohrmaschinen und/oder elektrische Schrauber ausgebildet. Durch den im Handgriff angeordneten Antriebsmotor ergibt sich ein handhabungsgünstig gelegener Schwerpunkt und eine kurze axiale Baulänge für den Maschinenkopf. Wie aus der DE-A-40 19 894 hervorgeht, bedingt eine derartige Ausgestaltung bisher einen relativ voluminösen Handgriff, was bei Dauereinsatz zu Ermündungserscheinungen in der Greifhand führt. Überdies ist die Handhabung des als Drehschalter ausgebildeten und am Griffende angeordneten Betätigungsschalters doch recht umständlich und erfordert regelmäßig eine zweite Hand als Unterstützung.

Es ist daher die Aufgabe der vorliegenden Erfindung, ein Elektrowerkzeug gemäß der eingangs genannten Art zu schaffen, das sich bei extrem kurzer Bauweise weitestgehend ermüdungsfrei und bequem betätigbar handhaben läßt.

Diese Aufgabe wird dadurch gelöst, daß der als zur Vorderseite des Elektrowerkzeuges ragender Drückschalter ausgebildete Betätigungsschalter im Bereich zwischen dem Antriebsmotor und dem Umlenkgetriebe am Handgriff angeordnet ist, und daß der den Antriebsmotor mit dem Umlenkgetriebe verbindende Antriebsstrang im Innern des Handgriffes abgesetzt und an der Rückseite der in den Handgriff hineinragenden Endpartie des Betätigungsschalters vorbeigeführt ist.

Der abgesetzte Verlauf des Antriebsstranges bewirkt, daß das Umlenkgetriebe näher an die Rückseite des Elektrowerkzeuges heranrückt, wodurch sich für den nach vorne ragenden Abschnitt des Maschinenkopfes eine kürzere Baulänge einstellt. Ein weiterer Effekt dieser Maßnahme ist die Entstehung eines Freiraumes im Bereich zwischen dem Antriebsmotor und dem Umlenkgetriebe, der den Einbau eines als Drückschalter ausgebildeten Betätigungsschalters ermöglicht. Da der Antriebsstrang an der Rückseite der in den Handgriff hineinragenden Partie des Betätigungsschalters vorbeigeführt ist, ergibt sich keinerlei gegenseitige Behinderung. Ein im betreffenden Bereich angeordneter Betätigungsschalter läßt sich bequem mit dem Zeigefinger einer Greifhand betätigen, so daß einhändige Handhabung möglich ist. Der frei werdende Raum im Bereich des Griffendes läßt sich desweiteren dazu verwenden den Antriebsmotor ohne nennenswerte Vergrößerung der Grifflänge vom Umlenkgetriebe wegzurücken, was eine schmälere und damit griffgünstigere Gestaltung des Handgriffes ermöglicht.

Vorteilhafte Weiterbildungen der Erfindung sind in den abhängigen Ansprüchen 2-10 aufgeführt.

Wenn der Antriebsmotor des Elektrowerkzeuges eine Motorwelle aufweist, die an einer in Einbaulage dem Umlenkgetriebe zugewandten Antriebsseite einen stummelartigen Antriebsabschnitt aufweist, ist es von Vorteil, wenn die Endpartie des Betätigungsschalters dem Antriebsabschnitt der Motorwelle bezüglich deren Längsachse axial mit Abstand vorgelagert ist und im Bereich ihrer Rückseite von einer Zwischenwelle des Antriebsstranges umgangen wird, die zwischen den Antriebsabschnitt und das Umlenkgetriebe eingeschaltet und bezüglich des Antriebsabschnittes in Richtung der Rückseite des Elektrowerkzeuges versetzt angeordnet ist. Hierbei sind der Antriebsabschnitt und die Zwischenwelle zweckmäßigerweise achsparallel versetzt zueinander angeordnet.

Die Handhabung des Elektrowerkzeuges läßt sich auch dadurch verbessern, daß gemäß einer bevorzugten Weiterbildung ein Akku für netzunabhängigen Betrieb vorgesehen ist, der sich in einem Akkugehäuse befindet, welches als Bügel ausgebildet ist, wobei sich dieser Akku-Bügel dem Betätigungsschalter vorgelagert zwischen dem Maschinenkopf und dem dem Maschinenkopf entgegengesetzten, den Antriebsmotor enthaltenden Endbereich des Handgriffes erstreckt. Man wird hierbei von Elektrokabeln nicht behindert und verfügt zugleich über ein Elektrowerkzeug mit sehr zentral, etwa im Bereich des Betätigungsschalters liegendem Schwerpunkt.

Bei einer derartigen Ausgestaltung, die im übrigen auch bei einem üblichen Elektrowerkzeug der eingangs genannten Art verwirklicht werden kann, ergibt sich eine weitere Optimierung der Handhabbarkeit, wenn der Akku-Bügel außer in der dem Handgriff vorgelagerten Normalstellung in mindestens einer von dieser abweichenden Sonderstellung am Handgriff festlegbar ist, wobei er in der jeweiligen Sonderstellung seitlich außerhalb der vom Maschinenkopf und vom Handgriff aufgespannten Arbeitsebene zu liegen kommt und ausgehend vom handgriffseitigen Befestigungsbereich frei endend nach oben ragt. Bei besonderen Anwendungsfällen kann der vorgelagerte Akku-Bügel hinderlich sein, und er läßt sich auf diese Weise problemlos in eine nicht hindernde Stellung verlagern. Eine Verbindung zum Handgriff sollte in jeder Stellung gegeben sein, um die elektrische Energieversorgung zu gewährleisten. Handelt es sich um einen wiederaufladbaren Akku, so ist es vorteilhaft, wenn der Akku-Bügel lösbar am Gehäuse des Elektrowerkzeuges angeordnet ist.

Nachfolgend wird die Erfindung anhand der beiliegenden Zeichnung näher erläutert. In dieser zeigen:
- Figur 1: eine erste Bauform des erfindungsgemäßen Elektrowerkzeuges in Seitenansicht und teilweise nach Art eines Längsschnittes aufgebrochen,
- Figur 2: einen Querschnitt durch das Elektrowerkzeug aus Figur 1 gemäß Schnittlinie II-II aus Figur 1,
- Figur 3: eine Rückansicht des Elektrowerkzeuges aus Figur 1 bei in einer Sonderstellung befindlichem Akku-Bügel, und
- Figur 4: ein weiteres Ausführungsbeispiel des erfindungsgemäßen Elektrowerkzeuges in einer Untersicht entsprechend Pfeil IV aus Figur 1, aus der eine Gestaltungsvariante des Akku-Bügels hervorgeht.

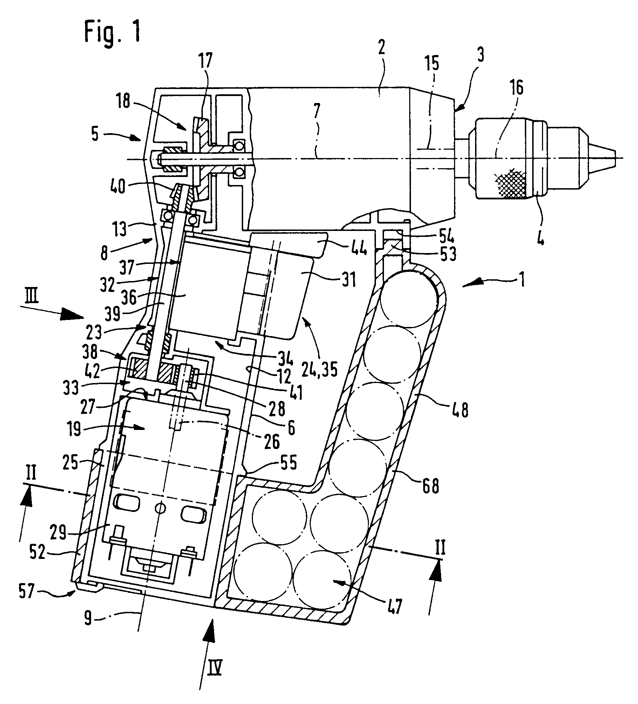

Bei dem in Figur 1 abgebildeten Elektrowerkzeug 1 handelt es sich um einen sogenannten Bohrschrauber. Es kann sowohl zum Bohren von Löchern als auch zum Ein- und/oder Ausdrehen von Schrauben verwendet werden. Als Arbeitswerkzeuge kommen in diesen Fällen Bohrer bzw. Schraubeinsätze, sogenannte Bits, zum Einsatz.

Das Elektrowerkzeug 1 ist pistolenartig ausgebildet, d.h. es ähnelt hinsichtlich seiner Gestaltung derjenigen einer Pistole. Dem Pistolenlauf entspricht hierbei der Maschinenkopf 2, der beim Ausführungsbeispiel eine annähernd zylindrische Außenkontur hat. An der vorderen Axialseite 3 des Maschinenkopfes 2 befindet sich beispielsgemäß ein Spannfutter 4, an dem sich das jeweilige Arbeitswerkzeug lösbar festlegen läßt.

Im Bereich der rückwärtigen Axialseite 5 des Maschinenkopfes 2 ist der nach Art eines Pistolengriffes quer abstehende Handgriff 6 vorgesehen. Er kann beispielsweise im rechten Winkel zur Längsachse 7 des Maschinenkopfes 2 verlaufen (nicht dargestellt). Vorzugsweise ist er aber wie abgebildet leicht schräg gestellt, so daß er sich ausgehend vom Ansatzbereich 8 des Maschinenkopfes 2 nach radial außen und zugleich in Richtung der Rückseite des Elektrowerkzeuges 1 erstreckt. Seine Längsachse 9 begrenzt hierbei zur Vorderseite des Elektrowerkzeuges 1 hin mit der Längsachse 7 einen stumpfen Winkel.

Der Maschinenkopf 2 und der Handgriff 6 stellen gemeinsam das Gehäuse 13 des Elektrowerkzeuges 1 dar. Sie sind einstückig miteinander ausgebildet, beim Ausführungsbeispiel allerdings zugleich in zwei Gehäusehälften 14, 14' unterteilt, wobei die Trennebene von den beiden Längsachsen 7, 9 aufgespannt wird.

Mittels nicht näher dargestellter Montageschrauben sind die Gehäusehälften 14, 14' lösbar miteinander verbunden, um zu Montage- und/oder Reparaturzwecken ein Öffnen des Gehäuses 13 zu ermöglichen.

Im zusammengebauten Zustand der Gehäusehälften 14, 14' auf den die nachfolgende Beschreibung Bezug nimmt, ergibt sich im Innern von Maschinenkopf 2 und Handgriff 6 ein zusammenhängender Gehäuseraum 12. In ihm sind die für den Antrieb des Spannfutters erforderlichen Antriebselemente untergebracht. Diese werden nachfolgend beschrieben.

Im Maschinenkopf 2 ist eine lediglich strichpunktiert angedeutete Abtriebswelle 15 drehgelagert, deren Drehachse 16 mit der Längsachse 7 zusammenfällt. Sie trägt einenends das bereits erwähnte Spannfutter 4 und ist über dieses mit dem jeweiligen Arbeitswerkzeug bestückbar. Anderenends steht sie in drehfester Verbindung mit dem Abtriebs-Zahnrad 17 eines Umlenkgetriebes 18, das im Übergangsbereich zwischen dem Maschinenkopf 2 und dem Handgriff 6 angeordnet ist. Beim Ausführungsbeispiel befindet es sich im rückwärtigen Endbereich des Maschinenkopfes 2.

Zwischen die Abtriebswelle 15 und das Abtriebszahnrad 17 kann bei Bedarf noch ein nicht näher dargestelltes Untersetzungsgetriebe zwischengeschaltet sein, um seitens des Spannfutters eine gegenüber dem Abtriebszahnrad 17 höhere oder geringere Drehzahl zu erhalten.

Als Antriebsquelle für das Elektrowerkzeug 1 dient ein elektrisch betätigbarer Antriebsmotor 19, der im Inneren des Handgriffes 6 untergebracht ist. Er steht über einen allgemein mit 23 bezeichneten Antriebsstrang mit dem Umlenkgetriebe 18 in Drehantriebsverbindung. Der Betrieb des Antriebsmotors 19 läßt sich mittels eines Betätigungsschalters 24 steuern, der ebenfalls am Handgriff 6 befestigt ist und über nicht näher dargestellte Elektrokabel an den Antriebsmotor 19 angeschlossen ist.

Das Umlenkgetriebe 18 sorgt für eine Umlenkung des Kraftflusses bzw. Drehmoments auf dem Weg vom Antriebsmotor 19 zur Abtriebswelle 15. Dies ist erforderlich, da der Antriebsstrang 23 quer zur Drehachse 16 verläuft.

Der Antriebsmotor 19 ist im Bereich des dem Maschinenkopf 2 entgegengesetzten Griffendes 25 untergebracht. Er kann als sogenannter Stabmotor ausgebildet sein, der sich durch eine schlanke Bauweise auszeichnet, und ist beim Ausführungsbeispiel im wesentlichen zylindrisch konturiert. Seine Motorwelle 26 ist derart ausgerichtet, daß sie mit der Längsachse 9 zusammenfällt. Die Einbaulage des Antriebsmotors 19 im Innern des Handgriffes 6 ist derart, daß seine Antriebsseite 27 dem Umlenkgetriebe 18 zugewandt ist. An dieser Antriebsseite 27 ragt die Motorwelle 26 mit einem stummelartigen Antriebsabschnitt 28 aus dem Motorgehäuse 29 heraus.

Der zwischen dem Antriebsmotor 19 und dem Umlenkgetriebe 18 verlaufende Antriebsstrang 23 hat nun keinen linearen Verlauf, sondern ist im Gehäuseraum 12 im Innern des Handgriffes 6 abgesetzt. Zu diesem Zweck ist beispielsgemäß eine einmalige Abstufung des Strangverlaufes vorgesehen, wobei sich die Strangstufe 33 im Bereich des Antriebsabschnittes 28 befindet.

Die Abstufung hat zur Folge, daß der ausgehend vom Antriebsmotor 19 sich an die Strangstufe 33 anschließende Abschnitt 32 des Antriebsstranges in Richtung zur Rückseite des Elektrowerkzeuges 1 bzw. des Handgriffes 6 versetzt zu liegen kommt. Dies schafft axial im Anschluß an den Antriebsabschnitt 28 einen zwischen diesem und dem Maschinenkopf 2 zu liegen kommenden Freiraum 34 im Hohlraum des Handgriffes 6. Dieser ist beispielsgemäß für die Montage des Betätigungsschalters 24 ausgenützt. Bei dem Betätigungsschalter 24 handelt es sich um einen Drückschalter 35, der größtenteils in den Hohlraum des Handgriffes 6 versenkt ist und dort den Freiraum 34 einnimmt. Er ragt mit einer Betätigungspartie 31 in Richtung der Vorderseite des Elektrowerkzeuges 1 aus dem Handgriff 6 heraus; der übrige Teil des Drückschalters 35, nachfolgend als Endpartie 36 bezeichnet, ragt quer zur Längsachse 9 ins Innere des Handgriffes 6 hinein.

Die Endpartie 36 endet vor dem versetzten Abschnitt 32 des Antriebsstranges 23, der also an der Rückseite 37 des Betätigungsschalters 24 vorbeigeführt ist. Da der versetzte Abschnitt 32 im Vergleich zu einer rein axialen Verlängerung der Motorwelle 26 sehr viel weiter im rückwärtigen Bereich des Maschinenkopfes 2 angelangt, konnte das Umlenkgetriebe 18 sehr weit in Richtung der rückwärtigen Axialseite 5 innerhalb des Maschinenkopfes 2 zurückgesetzt werden, so daß die axiale Baulänge des letzteren auf ein Minimum reduziert ist.

Beispielsgemäß ist die Endpartie 36 des Betätigungsschalters 24 dem Antriebsabschnitt 28 der Motorwelle 26 axial mit Abstand vorgelagert. Sie befindet sich also an einer Stelle, die bei linearer Verlängerung der Motorwelle 26 von dieser getroffen würde. Für den abgestuften Verlauf des Antriebsstranges 23 ist gemäß Figur 1 ein Getriebe 38 verantwortlich, das den Antriebsabschnitt 28 mit einer Zwischenwelle 39 antriebsmäßig verbindet, die den versetzten Abschnitt 32 des Antriebsstranges 23 bildet. Die Zwischenwelle 39 ist achsparallel bezüglich der Motorwelle 26 ausgerichtet und verläuft mit radialem Versatz zu dieser an der Rückseite 37 des Betätigungsschalters 24 vorbei. Die Zwischenwelle 39 ist also zwischen das Umlenkgetriebe 17 und den Antriebsabschnitt 28 zwischengeschaltet.

Im Bereich des Umlenkgetriebes 18 trägt die Zwischenwelle 39 drehfest ein Eingangszahnrad 40, das mit dem Abtriebszahnrad 17 kämmt und zusammen mit diesem das Umlenkgetriebe 18 bildet.

Anstelle des Eingangszahnrades 40 kann die Zwischenwelle 39 auch unmittelbar mit einem entsprechenden Zahnkranz versehen sein. Bei beiden Zahnrädern handelt es sich zweckmäßigerweise um Kegelräder. Hinsichtlich des detaillierten Aufbaues kann beispielsweise auf das in der DE-A-40 19 894 beschriebene Umlenkgetriebe verwiesen werden, von dem sich die beispielsgemäße Ausgestaltung im wesentlichen nur dadurch unterscheidet, daß das Abtriebszahnrad 17 von der Vorderseite des Maschinenkopfes 2 her mit dem Eingangszahnrad 40 in Eingriff steht.

Im Bereich der Strangstufe 33 sorgt beispielsgemäß ein Getriebe 38 für den abgesetzten Verlauf. Es umfaßt ein erstes Antriebszahnrad 41, das drehfest auf dem Antriebsabschnitt 28 sitzt, und ferner ein mit diesem kämmendes zweites Antriebszahnrad 42, das drehfest auf dem dem Eingangszahnrad 40 entgegensetzten Endbereich der Zwischenwelle 39 aufgezogen ist. Bei den Zahnrädern 41, 42 handelt es sich beispielsgemäß um Stirnräder, die schräg verzahnt sein können. Es versteht sich, daß anstelle von Zahnrädern auch die zugeordneten Wellenabschnitte mit entsprechenden Zahnkränzen versehen sein können.

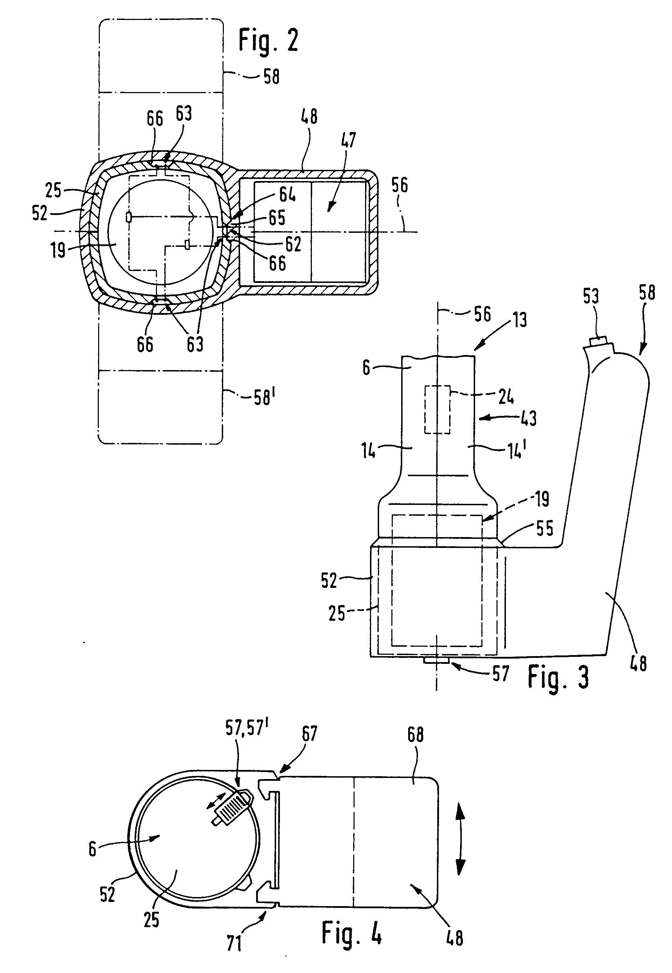

Im Bereich der Strangstufe 33 erfährt der Antriebsstrang 23 eine zweimalige rechtwinkelige Umlenkung. Auf diese Weise wird der in den Handgriff 6 hineinragende Betätigungsschalter 24 rückseitig umgangen. Da somit der Antriebsmotor 19 relativ weit vom Umlenkgetriebe 18 abgerückt ist, ergibt sich ein relativ langer oberer Griffbereich 43, der gemäß Figur 3 eine geringer Außenbreite aufweisen kann als der Bereich des den Antriebsmotor 19 aufnehmenden Griffendes 25. Die schlankere Gestaltung macht ein müheloses Ergreifen durch die das Elektrowerkzeug 1 verwendende Person möglich, wobei der Zeigefinger der Greifhand automatisch an der Drückpartie 31 zu liegen kommt, so daß sich das Elektrowerkzeug mühelos handhaben läßt.

Der Drückschalter 35 ist bevorzugt ein kombinierter Ein/Aus-Schalter und Drehzahl-Steuerschalter. Bei ihm läßt sich über das Maß der Eindrücktiefe die Drehgeschwindigkeit des Antriebsmotors 19 regulieren. Oberhalb des Drückschalters 35 sind beim Ausführungsbeispiel noch ein Umpolschalter 44, mit dem sich die Drehrichtung verändern läßt.

Um die Einsatzmöglichkeiten des beispielsgemäßen Elektrowerkzeuges 1 noch variabler zu gestalten, ist es für netzunabhängigen Betrieb ausgestaltet. Der Antriebsmotor 19 bezieht seine elektrische Energie von einem beim Ausführungsbeispiel wiederaufladbaren Akku 47, der in der Zeichnung von einer Mehrzahl strichpunktiert angedeuteter und untereinander verbundener Akku-Einzelzellen repräsentiert wird. Der Akku 47 sitzt in einem bügelförmigen Gehäuse, das nachfolgend als Akku-Bügel 48 bezeichnet wird. Der Akku-Bügel 48 ist abnehmbar am Gehäuse 13 festgelegt, so daß er sich zum Aufladen entfernen läßt.

In der in Figuren 1 und 2 gezeigten Normalstellung erstreckt sich der Akku-Bügel 48 mit Abstand vor dem zum Ergreifen und Handhaben des Elektrowerkzeuges 1 verwendeten oberen Griffbereich 43 zwischen dem vorderen Bereich des Maschinenkopfes 2 und dem Bereich des Griffendes 25. Der Akku-Bügel 48 und das Gehäuse 13 bilden somit in der Normalstellung ein geschlossenes Ringgebilde, in dessen inneren Bereich die Drückpartie 31 des Betätigungsschalters 24 hineinragt.

Der Akku-Bügel 48 des Ausführungsbeispieles ist ein Aufsteckteil. Er verfügt am handgriffseitigen Endbereich über eine hülsenartige Aufsteckpartie 52, mit der er koaxial auf das Griffende 25 aufgeschoben ist. Im Bereich des entgegengesetzten oberen Bügelendes ist eine erste Steckpartie 53 vorgesehen, die in der Normalstellung mit einer maschinenkopfseitigen zweiten Steckpartie 54 in Eingriff steht. Die Steckrichtung verläuft in Höhenrichtung des Elektrowerkzeuges 1.

Zu seiner Montage wird der Akku-Bügel 48 mit seiner Aufsteckpartie 52 in Richtung der Längsachse 9 auf das Griffende 25 aufgesteckt, wobei gegen Ende des Aufsteckweges die beiden Steckpartien 53, 54 ebenfalls miteinander in Eingriff gelangen. Zwischen dem Handgriff 6 und dem Akku-Bügel 48 kann noch zusätzlich ein beim Ausführungsbeispiel griffseitiger Anschlag 55 wirken, der den Aufsteckweg begrenzt. In der somit vorliegenden Normalstellung spannen der Maschinenkopf 2, der Handgriff 6 und der Akku-Bügel 48 eine gemeinsame Ebene auf, die nachfolgend als Arbeitsebene 56 bezeichnet wird und in den Figuren 2 und 3 angedeutet ist. Eine beliebig gestaltete, zwischen dem Akku-Bügel 48 bzw. dessen Aufsteckpartie 52 und dem Handgriff 6 wirkende Sicherungseinrichtung 57 sorgt dafür, daß der Akku-Bügel 48 in der Normalstellung in Richtung der Längsachse 9 fixiert und gegen ein Herabrutschen vom Handgriff 6 gesichert ist.

Somit sitzt der Akku 47 praktisch unmittelbar neben dem Handgriff 6 und sorgt für einen zentralen Schwerpunkt des Elektrowerkzeuges 1, was die Handhabung erleichtert und die Belastung der Greifhand der Bedienperson reduziert.

Infolge der kurzen axialen Baulänge des Maschinenkopfes 2 ergibt es sich, daß der Verbindungsbereich zwischen dem Akku-Bügel 48 und dem Maschinenkopf 2 relativ nahe am vorderen Endbereich des Maschinenkopfes 2 zu liegen kommt. Obwohl sich der Verbindungsbereich auf der gleichen Seite des Maschinenkopfes 2 befindet wie der Handgriff 6, kann es dabei gelegentlich zu einer Behinderung eines Arbeitsvorganges durch den nach vorne ragenden Akku-Bügel kommen. Um derartigen Beeinträchtigungen zu begegnen, läßt sich der Akku-Bügel 48 beim Ausführungsbeispiel außer in der Normalstellung in mindestens einer von dieser abweichenden Sonderstellung 58, 58' am Handgriff festlegen. Die beispielsgemäß möglichen Sonderstellungen 58, 58' sind in Figur 2 strichpunktiert angedeutet, in Figur 3 ist der Akku-Bügel 48 eine Sonderstellung 58 einnehmend gezeigt.

In der jeweiligen Sonderstellung 58, 58' kommt der Akku-Bügel 48 seitlich außerhalb der Arbeitsebene 56 zu liegen. Er ist zwar weiterhin mit seiner Aufsteckpartie 52 auf dem Griffende 25 gehalten, ragt aber ausgehend von dort seitwärts und zugleich nach oben, wo er im Bereich der ersten Steckpartie 53 frei endet. In Figur 3 sind diese Gegebenheiten gut zu erkennen.

Ein völliges Entfernen des Akku-Bügels 48 ist beim Ausführungsbeispiel ohne Unterbrechung der Betriebsbereitschaft des Elektrowerkzeuges 1 nicht möglich, da der in ihm enthaltene Akku 47 die Energie für den Antriebsmotor liefert. Die elektrische Verbindung gewährleisten bügelseitige erste elektrische Verbindungsmittel 62, die an den Akku 47 angeschlossen sind, sowie handgriffseitige zweite elektrische Verbindungsmittel 63, die an den Antriebsmotor angeschlossen sind. Sowohl in der Normalstellung als auch in den Sonderstellungen stehen die ersten und zweiten elektrischen Verbindungsmittel 62, 63 in lösbarem elektrischen Kontakt, so daß die Energieübertragung gewährleistet ist. Die besagten Verbindungsmittel 62, 63 sind lediglich in Figur 2 und auch dort nur schematisch angedeutet, da sie grundsätzlich auf viele verschiedene Arten und Weisen ausgestaltet sein können. Zweckmäßig ist es, die handgriffseitigen elektrischen Verbindungsmittel 63 als in Aufsteckrichtung des Akku-Bügels 48 und damit in Richtung der Längsachse 9 verlaufende Leiterbahnen am Außenumfang des Griffendes 25 vorzusehen und die bügelseitigen ersten elektrischen Verbindungsmittel 62 als im Innenbereich der Aufsteckpartie 52 vorgesehene federnde Kontakte auszubilden, die beim Aufstecken des Akku-Bügels 48 auf den Handgriff 6 automatisch unter Herstellung des elektrischen Kontaktes auf die Leiterbahnen aufgeschoben werden.

Beim Ausführungsbeispiel gemäß Figuren 1 bis 3 verfügt der Handgriff 6 im Bereich seines Griffendes 25 über mehrere zweite elektrische Verbindungsmittel 63, die entsprechend der möglichen Stellungen des Akku-Bügels 48 entlang des Umfanges des Griffendes 25 verteilt angeordnet sind. Entsprechend der vom Akku-Bügel 48 jeweils eingenommenen Normal- bzw. Sonderstellung stehen somit die bügelseitigen ersten elektrischen Verbindungsmittel 62 mit den für diese Stellung vorgesehenen zweiten elektrischen Verbindungsmitteln 63 des Handgriffes 6 in elektrischer Verbindung.

Um den Akku-Bügel 48 beim Ausführungsbeispiel gemäß Figuren 1 bis 3 aus der Normalstellung in eine Sonderstellung 58, 58' oder umgekehrt zu verlagern, ist er am Handgriff 6 umzustecken. Die aufeinander abgestimmten Außen- und Innenkonturen des Griffendes 25 und der Aufsteckpartie 52 haben hier einen unkreisförmigen Verlauf, so daß eine relative Verdrehung um die Längsachse 9 ausgeschlossen ist. Die Konturen ähneln einem Quadrat mit nach außen gewölbten Seitenflächen. Alternativ oder zusätzlich können auch nach Art von Nut und Feder ineinandergreifende Verdrehsicherungsmittel 64 vorgesehen sein, wie dies beim Ausführungsbeispiel der Fall ist. Dort weist die Aufsteckpartie 52 eine sich in Aufsteckrichtung erstreckende rippenförmige Erhebung 65 auf, die in den verschiedenen Bügelstellungen jeweils in eine von mehreren komplementär gestalteten nutartigen Längsvertiefungen 66 am Außenumfang des Griffendes 25 eingreift.

Bei der in Figur 4 gezeigten Beispielsvariante ist der Akku-Bügel 48 als am Handgriff 6 drehbar gelagerter Schwenkbügel ausgebildet, wobei die zueinander komplementären Außen- und Innenkonturen des Griffendes 25 und der hülsenförmigen Aufsteckpartie 52 eine kreisförmige Gestalt haben. Die Sicherungseinrichtung 57 dient hierbei zugleich als lösbare Arretiereinrichtung 57', mit der der Akku-Bügel 48 in den möglichen Stellungen lösbar drehfest gegenüber dem Handgriff 6 festlegbar ist. Selbstverständlich wäre auch eine getrennte Ausgestaltung der Sicherungseinrichtung und der Arretiereinrichtung möglich.

Da der Akku-Bügel 48 beim Ausführungsbeispiel gemäß Figur 4 in der Normalstellung ebenfalls nach Art des Ausführungsbeispieles gemäß Figuren 1 bis 3 am Maschinenkopf 2 fixiert ist, läßt er sich auch bei gelöster Arretiereinrichtung 57' nicht ohne weiteres aus der Normalstellung herausschwenken. Aus diesem Grunde ist er zweigeteilt ausgebildet, wobei der Trennbereich 67 zwischen der Aufsteckpartie 52 und dem sich daran anschließenden eigentlichen Bügelteil 68 verläuft. In diesem Trennbereich ist eine lösbare Kupplungseinrichtung 71 vorgesehen, die als Steckkupplung ausgebildet ist. Sie gestattet es, das Bügelteil 68 bei Bedarf relativ zur Aufsteckpartie 52 in Richtung der Längsachse 9 zu verlagern. Um von der Normalstellung in eine Sonderstellung 58, 58' zu gelangen, wird hier das Bügelteil 68 vom Maschinenkopf 2 weg entgegen der Aufsteckrichtung relativ zur Aufsteckpartie 52 verschoben, bis die beiden Steckpartien 53, 54 außer Eingriff stehen, so daß anschließend ein Verdrehen des noch zusammenhängenden Akku-Bügels 48 um das Griffende 25 möglich ist. Bei diesem Ausführungsbeispiel wird zum Aufladen des Akkus 47 zweckmäßigerweise nur das Bügelteil 68 abgenommen. Die für die elektrische Verbindung zuständigen ersten und zweiten elektrischen Verbindungsmittel 62, 63 befinden sich bei dieser Ausgestaltung zweckmäßigerweise im Bereich der Kupplungseinrichtung 71, während zwischen der Aufsteckpartie 52 und dem Griffende 25 zusätzliche Schleifkontakte vorgesehen werden, die in jeder Drehstellung den elektrischen Kontakt zum Antriebsmotor 19 gewährleisten.

Die Ausgestaltung der Akku-Einheit als Akku-Bügel 48 der beschriebenen Art kann auch bei sonstigen netzunabhängig zu betreibenden Elektrowerkzeugen vorteilhaft sein, unabhängig davon, wo sich bei diesen der Antriebsmotor und der Betätigungsschalter befindet.

Abschließend sei darauf hingewiesen, daß die Aufsteckpartie 52 des Ausführungsbeispiels unter Umständen auch mit einem durchgehenden Längsschlitz versehen sein kann.

## Patentansprüche

1. Pistolenartig ausgebildetes Elektrowerkzeug (1), mit einem Gehäuse (13), das einen Maschinenkopf (2) und einen von diesem nach Art eines Pistolengriffes quer abstehenden Handgriff (6) bildet, wobei im Maschinenkopf (2) eine mit einem Arbeitswerkzeug bestückbare Abtriebswelle (15) drehgelagert ist und der Handgriff (6) einen elektrisch betätigbaren Antriebsmotor (19) aufnimmt, mit einem am Handgriff (6) vorgesehenen Betätigungsschalter (24) für den Antriebsmotor (19), und mit einem im Gehäuse (13) im Übergangsbereich zwischen Maschinenkopf (2) und Handgriff (6) angeordneten Umlenkgetriebe (18), das den Kraftfluß vom Antriebsmotor (19) zur Abtriebswelle (15) umlenkt, dadurch gekennzeichnet, daß der als zur Vorderseite (3) des Elektrowerkzeuges (1) ragender Drückschalter (35) ausgebildete Betätigungsschalter (24) im Bereich zwischen dem Antriebsmotor (19) und dem Umlenkgetriebe (18) am Handgriff (6) angeordnet ist, und daß der den Antriebsmotor (19) mit dem Umlenkgetriebe (18) verbindende Antriebsstrang (23) im Innern des Handgriffes (6) abgesetzt und an der Rückseite (37) der in den Handgriff (6) hineinragenden Endpartie (36) des Betätigungsschalters (24) vorbeigeführt ist.

2. Elektrowerkzeug nach Anspruch 1, dadurch gekennzeichnet, daß der Antriebsstrang (23) einstufig im Bereich zwischen dem Antriebsmotor (19) und der Endpartie (36) des Betätigungsschalters (24) abgesetzt ist.

3. Elektrowerkzeug nach Anspruch 1 oder 2, dessen Antriebsmotor (19) eine Motorwelle (26) aufweist, die an einer in Einbaulage dem Umlenkgetriebe (18) zugewandten Antriebsseite (27) einen stummelartigen Antriebsabschnitt (28) aufweist, dadurch gekennzeichnet, daß die Endpartie (36) des Betätigungsschalters (24) dem Antriebsabschnitt (28) der Motorwelle (26) bezüglich deren Längsachse axial mit Abstand vorgelagert ist und im Bereich ihrer Rückseite (37) von einer Zwischenwelle (39) des Antriebsstranges (23) umgangen wird, die zwischen den Antriebsabschnitt (28) und das Umlenkgetriebe (18) eingeschaltet und bezüglich des Antriebsabschnittes (28) in Richtung der Rückseite (5) des Elektrowerkzeuges (1) versetzt angeordnet ist.

4. Elektrowerkzeug nach Anspruch 3, dadurch gekennzeichnet, daß der Antriebsabschnitt (28) und die Zwischenwelle (39) achsparallel versetzt zueinander angeordnet sind.

5. Elektrowerkzeug nach Anspruch 3 oder 4, dadurch gekennzeichnet, daß der Antriebsabschnitt (28) und die Zwischenwelle (39) im Bereich zwischen dem Antriebsmotor (19) und dem Betätigungsschalter (24) durch ein Getriebe (38) miteinander verbunden sind, das zweckmäßigerweise zwei miteinander kämmende und insbesondere an Zahnrädern (41, 42) ausgebildete Zahnkränze umfaßt, deren einer mit dem Antriebsabschnitt (28) und deren anderer mit der Zwischenwelle (39) in jeweils drehfester Verbindung steht.

6. Elektrowerkzeug nach einem der Ansprüche 1 bis 5, dadurch gekennzeichnet, daß für netzunabhängigen Betrieb ein Akku (47) vorgesehen ist, der sich in einem Akku-Gehäuse befindet, das einen insbesondere abnehmbaren Bügel (48) bildet, wobei sich dieser Akku-Bügel (48) in Normalstellung dem Betätigungsschalter (24) vorgelagert zwischen dem Maschinenkopf (2) und dem dem Maschinenkopf (2) entgegengesetzten, den Antriebsmotor (19) enthaltenden Endbereich (25) des Handgriffes (6) erstreckt.

7. Elektrowerkzeug nach Anspruch 6, dadurch gekennzeichnet, daß der Akku-Bügel (48) außer in der Normalstellung in mindestens einer von dieser abweichenden Sonderstellung (58, 58') am Handgriff (6) festlegbar ist, wobei er in der jeweiligen Sonderstellung (58, 58') seitlich außerhalb der vom Maschinenkopf (2) und vom Handgriff (6) aufgespannten Arbeitsebene (56) zu liegen kommt und ausgehend vom handgriffseitigen Befestigungsbereich frei endend nach oben ragt.

8. Elektrowerkzeug nach Anspruch 7, dadurch gekennzeichnet, daß der Akku-Bügel (48) mittels einer am unteren Bügelende angeordneten und insbesondere hülsenartigen Aufsteckpartie (52) in Längsrichtung (9) des Handgriffes (6) auf dessen zweckmäßigerweise vom Griffende (25) gebildeten Befestigungsbereich insbesondere lösbar aufsteckbar ist und im Bereich des oberen Bügelendes eine Steckpartie (53) aufweist, die in der Normalstellung des Akku-Bügels (48) mit einer komplementären Steckpartie (54) am Maschinenkopf (2) in Eingriff steht.

9. Elektrowerkzeug nach Anspruch 7 oder 8, dadurch gekennzeichnet, daß der Akku-Bügel (48) zur Veränderung seiner Stellung am Handgriff (6) umsteckbar ist.

10. Elektrowerkzeug nach Anspruch 7 oder 8, dadurch gekennzeichnet, daß der Akku-Bügel (48) als durch Verdrehen gegenüber dem Handgriff (6) zwischen der Normalstellung und den Sonderstellungen (58, 58') verlagerbarer Schwenkbügel ausgebildet ist.

## Claims

1. Gun-type power tool (1) with a housing (13) forming a machine head (2) and a handle in the form of a gun handle projecting from the machine head, wherein a driving shaft (12) which can be equipped with an operating tool is pivotably mounted on the machine head (2), and the handle (6) accommodates an electrically actuable drive motor (19), with an actuating switch (24) for the drive motor provided on the handle (6), and with an offsetting gearbox (18) mounted in the transitional area between the machine head (2) and the handle (6), which switches the power flow from the drive motor (19) to the driving shaft (15), characterized in that the actuating switch (24) in the form of a pressure switch (35) extending towards the front (3) of the power tool (1) is located on the handle (6) in the area between the drive motor (19) and the offsetting gearbox (18), and that the drive line (23) connecting the drive motor (19) with the offsetting gearbox (18) is offset within the handle (6) and is guided past the rear (37) of the end section (36) of the actuating switch extending into the handle (6).

2. Power tool according to claim 1, characterized in that the drive line (23) is offset in a single step in the area between the drive motor (19) and the end section (36) of the actuating switch (24).

3. Power tool according to claim 1 or 2, the drive motor (19) of which has a motor shaft (26) with a stub-like drive section (28) at a drive side (27) facing the offsetting gearbox (18) in the assembled state, characterized in that the end section (36) of the actuating switch (24) is mounted in front of the drive section (28) of the motor shaft (26), with axial clearance relative to its longitudinal axis, and in the area of its rear side (37) is bypassed by an intermediate shaft (39) of the drive line (23), interposed between the drive section (28) and the offsetting gearbox (18) and offset relative to the drive section (28) in the direction of the back (5) of the power tool (1).

4. Power tool according to claim 3, characterized in that the drive section (28) and the intermediate shaft (39) are mounted offset and axially parallel to one another.

5. Power tool according to claim 3 or 4, characterized in that the drive section (28) and the intermediate shaft (39) are connected to one another in the area between the drive motor (19) and the actuating switch (24) via a gearbox (38), which expediently comprises two gear rims engaging with one another and in particular formed on gears (41, 42), each connected with torsional resistance, the one to the drive section (28) and the other to the intermediate shaft (39).

6. Power tool according to any of claims 1 to 5, characterized in that a battery (47) is provided for operation independent of the mains, said battery being located in a battery housing in the form of a bracket (48), in particular detachable, wherein this battery bracket (48), in the normal position mounted in front of the actuating switch (24), extends between the machine head (2) and the end section (25) of the handle opposite the machine head (2) and containing the drive motor (19).

7. Power tool according to claim 6, characterized in that the battery bracket (48) can be fixed to the handle (6) not only in the normal position but also in one or more special positions (58, 58') deviating from the former, and comes to rest in the respective special position (58, 58') at the side outside the working plane (56) fixed by the machine head (2) and the handle (6), and extends upwards from the handle-side fastening area with a free end.

8. Power tool according to claim 7, characterized in that the battery bracket (48) is fitted, in particular releasably, in the longitudinal direction (9) of the handle (6), to the fastening area formed expediently by the handle end (25), by means of a fitting section (52) located at the bottom end of the bracket and which is in particular sleeve-shaped, and has in the area of the top end of the bracket a plug section (53) which, in the normal position of the battery bracket (48), engages with a complementary plug section (54) on the machine head (2).

9. Power tool according to claim 7 or 8, characterized in that the battery bracket (48) can be relocated to change its position on the handle (6).

10. Power tool according to claim 7 or 8, characterized in that the battery bracket (48) is designed as a swivel bracket which can be moved, by twisting relative to the handle (6), between the normal positions and the special positions (58, 58').

## Revendications

1. Outil électrique (1) du type pistolet, comportant un boitier (13) qui constitue une tête de machine (2) et une poignée (6) dépassant perpendiculairement de celle-ci, à la façon d'une crosse de pistolet, un arbre de sortie (15) susceptible d'être équipé d'un outil de travail étant monté tournant dans la tête de machine (2) et la poignée (6) logeant un moteur d'entraînement (19) électrique, comportant un interrupteur (24) destiné au moteur d'entraînement (19) et prévu sur la poignée (6), et comportant un engrenage de renvoi d'angle (18) situé, dans le boîtier (13), dans la zone de transition entre la tête de machine (2) et la poignée (6), qui modifie la direction de transmission de la puissance entre le moteur d'entraînement (19) et l'arbre de sortie (15), caractérisé en ce que l'interrupteur (24), conformé en interrupteur à poussoir (35) dépassant en direction de la face avant (3) de l'outil électrique (1), est situé sur la poignée (6), dans la zone comprise entre le moteur d'entraînement (19) et l'engrenage de renvoi d'angle (18), et en ce que la ligne d'entraînement (23) reliant le moteur d'entraînement (19) et l'engrenage de renvoi d'angle (18) est décalée à l'intérieur de la poignée (6) et passe au niveau de la face arrière (37) de la partie terminale (36) de l'interrupteur (24) s'enfonçant dans la poignée (6).

2. Outil électrique selon la revendication 1, caractérisé en ce que la ligne d'entraînement (23) est décalée, en formant un gradin, dans la zone comprise entre le moteur d'entraînement (19) et la partie terminale (36) de l'interrupteur (24).

3. Outil électrique selon la revendication 1 ou 2, dont le moteur d'entraînement (19) présente un arbre (26) qui présente une partie d'entraînement (28) du type bout d'arbre, située d'un côté d'entraînement (27) orienté vers l'engrenage de renvoi d'angle (18), en position montée, caractérisé en ce que la partie terminale (36) de l'interrupteur (24) est positionnée axialement en avant et de façon espacée relativement à l'axe longitudinal de la partie d'entraînement (28) de l'arbre (26), et est contournée, dans la zone de sa face arrière (37), par un arbre intermédiaire (39) de la ligne d'entraînement (23), monté entre la partie d'entraînement (28) et l'engrenage de renvoi d'angle (18) et décalé, par rapport à la partie d'entraînement (28), en direction de la face arrière (5) de l'outil électrique (1).

4. Outil électrique selon la revendication 3, caractérisé en ce que la partie d'entraînement (28) et l'arbre intermédiaire (39) ont des axes parallèles mais décalés l'un par rapport à l'autre.

5. Outil électrique selon la revendication 3 ou 4, caractérisé en ce que la partie d'entraînement (28) et l'arbre intermédiaire (39), dans la zone comprise entre le moteur d'entraînement (19) et l'interrupteur (24), sont reliés par un engrenage (38) qui comprend avantageusement deux couronnes dentées engrenant l'une avec l'autre et, en particulier, formées sur des roues dentées (41, 42), dont l'une se trouve solidaire en rotation avec la partie d'entraînement (28) et l'autre se trouve solidaire en rotation avec l'arbre intermédiaire (39).

6. Outil électrique selon l'une des revendications 1 à 5, caractérisé en ce qu'est prévu, pour un fonctionnement hors réseau, un accumulateur (47) situé dans un boîtier d'accumulateur qui forme une pièce recourbée en étrier (48), en particulier amovible, cet étrier à accumulateur (48), en position normale, étant situé en avant de l'interrupteur (24), entre la tête de machine (2) et la partie terminale (25) de la poignée (6) renfermant le moteur d'entraînement (19) et située à l'opposé de la tête de machine (2).

7. Outil électrique selon la revendication 6, caractérisé en ce que l'étrier à accumulateur (48), outre sa position normale, est susceptible d'être fixé sur la poignée (6) dans au moins une position spéciale (58, 58') différant de celle-ci, l'étrier venant se placer, dans la position spéciale (58, 58') concernée, latéralement à l'extérieur du plan de travail (56) défini par la tête de machine (2) et la poignée (6), et s'élevant vers le haut, à partir de la zone de fixation située du côté de la poignée, en présentant une extrémité libre.

8. Outil électrique selon la revendication 7, caractérisé en ce que l'étrier à accumulateur (48), au moyen d'une partie emmanchable (52) disposée au niveau de l'extrémité inférieure de l'étrier et présentant, en particulier, une forme de douille, est susceptible d'être emmanché notamment de façon détachable, dans le sens de la longueur (9) de la poignée (6), sur sa zone de fixation conformée avantageusement en extrémité (25) de poignée, et présente une partie à emboîter (53), dans la zone de l'extrémité supérieure de l'étrier, qui coopère, dans la position normale de l'étrier à accumulateur (48), avec une partie d'emboîtement (54) complémentaire.

9. Outil électrique selon la revendication 7 ou 8, caractérisé en ce que, pour modifier sa position sur la poignée (6), l'étrier à accumulateur (48) est démontable.

10. Outil électrique selon la revendication 7 ou 8, caractérisé en ce que l'étrier à accumulateur (48) est conformé en étrier pivotant pouvant passer, par rotation relativement à la poignée (6), de la position normale aux positions spéciales (58, 58').
